Europäisches Patentamt

European Patent Office

Office européen des brevets

(11) Publication number: **0 132 521**
A1

# (12) EUROPEAN PATENT APPLICATION

(21) Application number: **84105129.5**

(22) Date of filing: **07.05.84**

(51) Int. Cl.⁴: **A 01 B 79/02**
**A 01 C 7/00, A 01 G 7/00**

(30) Priority: **01.08.83 US 519314**

(43) Date of publication of application:
**13.02.85 Bulletin 85/7**

(84) Designated Contracting States:
**BE DE FR GB IT**

(71) Applicant: **Hilmer, Elwyn P.**
**P. O. Box 262**
**Deary Idaho 83823(US)**

(72) Inventor: **Hilmer, Elwyn P.**
**P. O. Box 262**
**Deary Idaho 83823(US)**

(74) Representative: **Lippert, Hans-Joachim, Dipl.-Ing. et al,**
**Dipl.-Ing. W. Dahlke Dipl.-Ing. H.-J. Lippert**
**Patentanwälte Frankenforster Strasse 137**
**D-5060 Bergisch Gladbach 3(DE)**

(54) Soil conservation intercropping.

(57) Soil Conservation Intercropping utilizes large efficient farm equipment to plant and harvest two or more crops on one piece of land in one seasonal year, without trampling either of the crops in the process, utilizing the grass-grain cluster-row or the modular cluster-row planted on the contour of the slope and used as a vegetation terrace to stop wind and water from eroding the soils, then planting and harvesting row-crop crops between the cluster-rows or modular cluster-rows of grass-grain, all systems adaptable to all climates, wet or dry, long or short growing season, holding most all crop residue thereby adding more soil to the land each year.

EP 0 132 521 A1

SOIL CONSERVATION INTERCROPPING

## BACKGROUND OF THE INVENTION

Scientific evidence and a general consensus of farmers will agree that a grass-cover on land is the best way to control soil erosion. Grass residues also make up the very best, most fertile soils that exist today.

Therefore, using a grass-grain interplanted with row-crop crops is the best method to control soil erosion. Grass-grain crops are oats, wheat, barley, rice, triticale and the like. Row-crop crops are corn, soybeans, potatoes, cotton, sunflowers and the like.

Row-crop crops, for the most part, have been a higher income producing crop, therefore farmers have been plowing more of their land each year to grow row-crop crops. With the advent of the use of herbicides they began plowing all their tillable land every year. Soil erosion problems have developed because of this. Building terraces, plowing on the contour, and no-till cropping have helped hold some of the soils on the hillsides, however, the problem of soil erosion persists. Intercropping a grass-grain crop with row-crop crops as taught by the present invention seems to be the best way to solve the problem and without financial sacrifice to the grower. In time, total yields will prove to be greater than sole cropping either the grass-grain or the row-crop crops.

## SPECIFICATIONS OF THE INVENTION

It is one object of the invention therefore, to integrate rows of a grass-grain crop with a row or rows of row-crop crops, to use the physical configuration of the tractor and the harvesting machines to establish intercropping methods and equipment, and to adapt these intercropping methods and equipment to all farming areas of the world.

The basis of the invention is the concept of planting grass-grain cluster-rows. To explain this concept, one must first understood the term "full stand density". This term is used throughout this specification and claims and is well known and well understood by those skilled in the art. It is that density of individual plants for the particular crop concerned planted as a single crop in the area concerned to obtain the maximum average yield. Each area will have a particular density for a full stand density dependent on various agricultural parameters and therefore it is not possible to state in this specification details of all densities for all crops for all areas. However, one example is given by University of Minnesota in their publication "Planting Rate and Rate" at page 46 , this example generally applying in that area, but one skilled in the art will be able to modify the example given for specific areas within that general area.

Further, this invention provides for the planting of the grass-grain in cluster-row widths the width of a tractor or harvesting machine tire, and in modular cluster-row widths a tractor could either straddle between the tires thereof or could track within. Then, some time after the grass-grain has emerged planting row-crop crops between the cluster-rows or the modular cluster-rows with either a row-crop or a different grass-grain

Interrow-cropping is planting two full stands of grain in one field in one season. The first planting would be a grass-grain in cluster-rows with spaces between these cluster-rows Two of the spaces, symmetrically centered on the swath, would be slightly wider than the other spaces. This provides tracking spaces for herbicide spraying and interplanting, and a visual

- 2 -

means to guide the operator. This is done by crowding the rows within the cluster-rows closer together adjacent to the track guide spaces.

This method of intercropping is feasible in areas of heavy rainfall or irrigated fields, i.e., 40 to 80 inches of water per year.

For areas of less rainfall and little or no available irrigation, have between 20 to 40 inches of annual rainfall, the cluster-row size would be reduced by widening the spaces between the cluster-rows and/or planting less than a full stand grass-grain in the cluster-row.

With the wider spaces between the cluster-rows, the center of the interplanted swath can now be planted one-half row off the center of the cluster-row planted swath. Both planted swath widths will be the same. I call this method Double-Cover Intercropping. Double-Cover because the two crops will have a canopy over the soil most of the growing season. Planting an extra row or a thickly planted row central in the grass-grain cluster-row swath will guide the operator when interplanting. The second planted crop will be a row-crop crop planted full stand, preferably.

The reason for "clustering" the grass-grain rows with three or more rows within each cluster-row is that the center row or rows within the cluster-row will effectively crowd the outer rows out over the spaces between the cluster-rows. The cluster-row of grass-grain top growth spreads out and creates an umbrella over the ground that will break the fall of the rain drops, and will also shade the spaces between the cluster-rows which helps to keep weeds from growing in these spaces. Grass-grain root toxicity is also a deterrent to weed growth.

This grass-grain root toxicity also affects the growth of the interplanted row-crop crops, some, more than others. There is a need for grass-grains with less root toxicity and row-crop crops that are less affected by this toxicity.

It is possible and desirable to rotate the cluster-row row of the grass-grain and the row-crop row from season to season.

Only one row or a Twin-row row-crop crop would be planted between each cluster-row when Interrow-cropping or Double-Cover Intercropping. Please note: two rows planted close together have been used for years for row-crop crops. They are effectively, a wide single row, agronomically.

Therefore, Cluster-row Intercropping is divided into two methods, Interrow-cropping and Double-Cover Intercropping. The equipment to plant both methods is a Cluster-row Graindrill with individual Unit Graindrills mounted thereon. Each Unit Graindrill plants a cluster-row of grass-grain. The No-till Interplanter plants the second crop, a row-crop. Each row or Twin-row is planted with a conventional planter unit.

The Cluster-row Graindrill is a grass-grain graindrill mounted on a toolbar and attached to a tractor with a three point hitch with support wheels that also drives the Unit Graindrill's seed metering mechanism. A plurality of Unit Graindrills and ground opener press wheel assemblies are mounted on a toolbar. At each end of the toolbar are swath markers to enable the operator to accurately plant each swath.

The Cluster-row Graindrill width can be extended simply by mounting more Unit Graindrills to a longer toolbar. The width of the Cluster-row Graindrill is determined by first ascertaining how wide and how many rows will be in the swath of the second planted row-crop. Please note that there is swath overlap.

This is to insure that no gap spaces exist between swaths.

The Unit Graindrill is a very narrow graindrill to be manufactured in widths of about 16 inches, 24 inches, and 30 inches or about the width of a harvesting machine tire. Mounted on the Unit Graindrill frame or on a toolbar, are ground opener assemblies that plant the seed and firm the soil over the seed with press wheels. There are from 3 to 7 ground opener assemblies on each Unit Graindrill depending upon the width of the Unit Graindrill itself. The ground opener assemblies are laterally adjustable with respect to the Unit Graindrill and the Unit Graindrill is also laterally adjustable on the toolbar.

The rate at which seed is metered is also adjustable at each individual seed drop within the cluster-row. This allows the grower to "tailor" his cluster-row growth configuration, more or less umbrella, more planted seed in the outer rows or the inner rows. The cluster-row density may be adjusted more for erosion control than crop production.

The swath-central Unit Graindrill or Graindrills will need the adjustment capabilities to visibly mark, in growing grain, a reference for the interplanter operator to follow. 'Swath central' because, for example, the center of a swath could be a cluster-row of grass-grain, or a space between two cluster-rows. 'Swath central' might be the two track-guide spaces when Interrow-cropping. Then when Double-Cover Intercropping with wider spaces between cluster-rows of grass-grain, the guide row marker may be an extra planted row within a cluster-row, or a thick or thinly seeded row within a central-to-the-swath cluster-row.

No-till tilling ahead of each Unit Graindrill is an excellent way to control soil erosion. It is therefore possible and desirable in severe soil erosion circumstances that an early maturing winter variety of wheat be planted in the fall season in cluster-rows, then in mid or late spring, oats or barley (another grass-grain) would be planted in the spaces between the cluster-rows with the Cluster-row Graindrill. Both crops would be harvested separately leaving the stubble over the dormant season which would be the very best in soil erosion control.

The No-Till Interplanter is preferably a three point hitch toolbar mounted on a tractor with a plurality of equally spaced Planter Units mounted thereon. Forward of each Planter Unit and mounted on the toolbar are no-till tilling Danish tines. Support wheels could be mounted ahead of the tillage tines. The toolbar is positioned high enough to clear first planted crop without damaging the grain.

The Planter Unit is a conventional row-crop planter and is simply adapted to intercropping with a vertically extended bracket mounted to the toolbar. The planter unit is conveniently a conventional plate-type planter. The second planted row-crop could use the air, vacuum, electric-type planter unit as well. The Planter Unit is a self contained unit with its own seed metering drive and a separate hopper for storing grain. The space between cluster-rows allows no-till tillage and Planter Units with press wheels to be used. The no-till tines also cultivate weeds from the spaces between the cluster-rows.

In farming areas with an annual rainfall of about 15 to 30 inches and where sole cropping is done exclusively, I have devised a method of intercropping called Single-Double Intercropping. This means sole cropping two crops on one piece of land in one season. This method of intercropping uses a wider grass-grain cluster-row and wider spaces between the cluster-rows.

- 6 -

I have labeled these wider cluster-rows and spaces between, later to be planted to row-crops, as Modular Cluster-rows, Modular Spaces and Modular Row-Crop Rows.

The width of these modular rows and modular spaces being either a 'track-straddle' of the tractor and/or harvesting machine, or a modular width a tractor and/or a harvesting machine can 'track-within' or a combination of both widths. The 'track-straddle' width would be narrower than the 'track-within' width. These two widths will vary of course with the different sizes of tractor a grower uses. This falls in line with historical farming methods, using a small team of horses and 38-inch planted rows, a large team of horses and 42-inch planted rows or the old Farmall tractor and 40-inch planted rows or modern farm tractors using 30-inch planted rows, etc. The configuration of the motive power used on the farm determines the farming methods parameters.

Therefore, when farming gentle sloping land the grower would use the 'track-straddle' width Modular Cluster-row first planting and the tracks 'tracking-within' width for his Modular Row-crop Rows. For steeper sloping farmland, the grower would use tracks 'tracking-within' width for the Modular Cluster-row first planting and 'track-straddle' width for his Modular Row-crop rows. For flat-land farming, the grower might want to use the tracks 'tracking within' width Modular Row for both his Modular Cluste-rows of grass-grain and the Modular Row-crop rows. This may be a more efficient harvesting method. The grass-grain stubble modular row would buffet the surface wind enough to stop soil erosion. The modular grass-grain rows should preferably be planted perpendicular to the direction of the prevailing winds for flat land farming.

Both the Modular Rows of grass-grain and Modular Rows of row-crop crops benefit from lateral solar exposure because grass-grain reaches its mature height early in the growing season. The row-crop crop reaches its mature height late in the growing season after the grass-grain has been harvested. The grower will therefore plant heavier stands of both crops in the alternating Modular Rows. His overall yields will therefore exceed those of sole cropping one crop.

It is possible and desirable that the grower rotate crops on the Modular Rows from year to year. All Modular Row cropping preferably should be planted on the contour of the slope if at all possible.

Modular Single-Double Intercropping will have two or more row-crop rows planted in each Modular Space.

In dryland farming areas with 5 to 15 inches of rainfall annually, where mostly grass-grains are grown and one sole crop is taken off the land every two years, the soil losses from eerosion are exceeding heavy. In some places the soil loss is more than twenty tons per acre per year.

Modular Fallow Farming will alleviate this problem. The Modular Rows of grain and fallow are close enough together to stop sheet wash and rill erosion and the standing stubble Modular Rows will effectively buffet the winds to stop blowing soils from the Modular Fallowed Rows.

Should a heavy rain occur early in the mid-summer season, the grower would then have the option of planting the Modular Fallowed Space to a short season crop such as peas or lentils as a fallow crop.

Modular Fallow Farming is different from Single-Double Intercropping in that both grain and fallowed rows are the <u>same width</u>. The modular rows are alternately rotated to grain every second year.

The grower would use 'track-straddling' Modular Row widths on steep slopes planted on the contour and 'tracking-within' Modular Row widths on the more gentle slopes planted on the contour.

Modular Fallow Farming is the same acreage planted and harvested as traditional methods. However, Modular Fallow Farming has the potential for increasing yields because the grass-grain terraces hold the runoff and perk this additional moisture into the subsoils, therefore increasing moisture availability to the crop which increases yields.

Therefore, Modular Intercropping is divided into two methods, Single-Double Intercropping and Modular Fallow Farming. The equipment to plant the grass-grain first crop, both methods, is a Modular Graindrill with individual Modular Unit Graindrills mounted thereon, a Modular Tilling Toolbar would till the Modular Spaces and cultivate the row-crop crop. The Modular Interplanter plants the second crop, a row-crop when Single-Double Intercropping. Located on the Modular Interplanter are 2 or more Modular Planter Units with a Modular Space or Spaces there between. Each Modular Planter Unit has at least two or more planter units mounted thereon.

The Modular Graindrill is a three point hitch, tractor mounted toolbar with ground support wheels with two or more Modular Unit Graindrills attached and spaced apart a Modular Space width. The ground support wheels drive the Modular Unit Graindrills' seed metering mechanism.

The Modular Unit Graindrill is very much the same as the Unit Graindrill mechanically, except the unit is wider and has more ground opener assemblies mounted thereon. The Modular Unit Graindrill would be manufactured in about three different sizes, 60, 90 and 120 inches wide. The 60 inch unit could plant a 40 inch wide Modular Row of grass-grain, for example. The Modular Unit Graindrill is laterally adjustable on the Modular Graindrill, it's ground opener assemblies are laterally adjustable within the units width and the seed metering mechanism is adjustable for each row of seed planted.

Both the Unit Graindrill and the Modular Unit Graindrill can have no-till tillage mounted forward of each unit and attached to the toolbar. When Modular Fallow Farming, the modular unit graindrill is then used as an Interplanter planting modular cluster-rows of crops between the modular crops of grass-grain stubble. They can also have forage grass seed, fertilizer and herbicide attachments mounted on the toolbar.

The Modular Interplanter comprises in combination a toolbar, hitch means for attaching the toolbar to a tractor, ground wheels for supporting the toolbar for transport across a field, a plurality fo Modular Planter Units mounted along the length of the toolbar, the Modular Planter Units spaced apart approximately the Modular Cluster-row width of the first planted grass-grain. The Modular Planter Units are attached to the toolbar, laterally adjustable thereon, with Planter Units mounted thereon. No-till tilling may be attached forward to the Planter Unit on its frame or attached to the toolbar.

My _____ Application No. _____filed _____ _____discloses a high center frame tractor with a three point hitch located under the high center frame (the configuration of which has been standardized), a center mounted toolbar and equipment is mounted thereon. The tractor would have all wheel auto-steerable to accurately negotiate intercropped rows planted on steep hillsides having slopes of 5% to 20% grade for example.

A high-center frame tractor having only a front-wheel drive and front wheel auto steering, the rear wheels and axle trailing, could e used for level land to a 3% slope farming for example. Then too, another high center frame tractor configuration could have a front wheel drive, and front and rear wheel auto-steering for farming slopes of 2% to 6% grade for example.

The high-center tractor therefore distributes the dynamic and draft loading equally on each axle. This keeps the tractor, toolbar, and equipment mounted thereon in-line with its direction of travel when intercropping.

Grass-grain (small grain) oats, wheat, barley, rye, etc., as a rule-of-thumb yields about 90% that of a row-crop crop. Recently, however, profits from sole cropping small grain exceed those of row-crop cropping. Some yields for wheat have been as high as 130 to 140 bushels per acre. New varieties of small grain are increasing these yields. Following is a list of Agronomic advantages of growing small grain in addition to being the best ground cover for soil erosion control:

1. Toxic root systems discourage weed growth.

2. Establishes a canopy over the ground in early spring.

3. Can grow in all farming latitudes and climates.

4. Developes massive root system early in the season.

5. Roots extend 4 to 5 feet deep into the subsoils providing soil aeration.

6. Breaks up the infestation cycle of the corn root worm and soybean nematodes.

7. Does not require cultivation.

8. Plant life cycle is short term.

9. A familiar crop to all growers in farming, world wide.

10. Relatively easy to plant and harvest.

11. Can be fall or early spring seeded.

12. Can almost directly be converted into feed.

13. New hybrids grow to manageable heights. No lodging, or down grain in harvest.

14. New varieties are high in protein content, both the straw and grain.

15. Small grain straw and animal residue can be converted to 35% protein animal feed.

16. Can withstand drouth.

17. Can be used for grazing and for grain production.

18. Field dries for safe storage.

19. Can be windrowed and later harvested in mid summer.

20. Responds good in poor soils that are fertilized.

21. A good cover crop to start a new grass seeding i.e., alfalfa, clover, brome, etc.

22. Small grain rotated seasonally with row-crop is a good soil conditioner. Yields of both will continue to increase.

Sole cropping no-till farming is a break-even operation in-so-far as soil erosion is concerned. On the average, the land loses four tons topsoil from erosion and gains four tons of residue using this method of farming. Clustered-row intercropping saves the first four tons per acre from eroding and adds four tons per acre of residue (soil eventually), an 8 ton of soil per acre gain each year.

With land prices as high as they are, the grower needs something more than blocked seed drops in a conventional graindrill to use. The economics of farming today demand the very best methods of crop production and soil erosion control. The cluster-rows and modular cluster-rows of grass-grain intercropping fulfills this need.

The practice of cluster-row and modular cluster-row cropping should be readily adopted with or without the soil erosion control problem. The lateral solar (sun light entering the sides of the cluster-row with spaces between) energy access to the crop for ten hours per day will increase yields in the cluster-row by ten to twenty percent, and in these times of air pollution, this will make a significant difference in crop production.

With the foregoing in view, and other advantages as will become apparent to those skilled in the art to which this invention relates as this specification proceeds, the invention is herein described by reference to the accompanying drawings forming a part hereof, which includes a description of the best mode known to the applicant and of the preferred typical embodiment of the principles of the present invention, in which:

DESCRIPTION OF THE DRAWINGS

Figure 1 is a plan view of a cluster-row graindrill suitable for use in planting first crop cluster-rows grass-grains when Interrow-cropping.

Figure 2 is a cross-section along the lines 2-2 of Figure 1.

Figure 3 is a side elevational view of one unit graindrill from Figure 1.

Figure 4 is a rear elevational view of the unit graindrill of Figure 3.

Figure 5 is a front elevational view of the unit graindrill of Figure 3.

Figure 6 is a front elevational view on an enlarged scale of the seed metering mechanism of Figure 5.

Figures 7 and 7A are side elevational views of the seed metering mechanism of Figure 6.

Figure 8 is a top plan view of a no-till interplanter used when interrow-cropping.

— 12

Figure 9 is a view in rear elevation of a planter unit of the no-till interplanter of Figure 8.

Figure 10 is a view in side elevation of a planter unit of the no-till interplanter of Figures 8 and 9.

Figures 11 is a view in front elevation of a planter unit of the interplanter of Figures 8 and 9.

Figure 12 is a schematic illustraton of the system of farming called herein Interrow-cropping.

Figures 13 and 13A are schematic illustrations of the system of farming called herein Double-Cover Intercropping.

Figure 14 is a plan view of a no-till cluster-row graindrill for use in the method illustrated in Figures 13, 13A.

Figure 15 is a side elevational view of the no-till cluster-row graindrill of Figure 14.

Figure 16 is a plan view of a no-till interplanter for use in the method illustrated in Figures 13, 13A.

Figure 17 is a side elevation view of the no-till interplanter of Figure 16.

Figure 18 is a schematic illustrations of the system of farming called herein Modular Single-Double Intercropping.

Figure 19 is a plan view of a modular graindrill apparatus for use in the system illustrated in Figure 18.

Figure 19A is a fragmentary front view of Figure 19.

Figure 19B is a side elevational view of Figure 19.

Figure 20 is a plan view of a modular interplanter for use in the system illustrated in Figure 18.

Figure 20A is a side elevation view of a modular interplanter of Figure 20.

Figures 21 and 21A are schematic illustrations of the protection of the soil provided by grass-grain terraces formed by the system of Figure 13.

Figure 22 is a schematic illustration of the system of farming called herein Modular Fallow Farming.

Figure 23 is a plan view of a modular graindrill for use in the system illustrated in Figure 22.

Figure 24 is a side elevation view of the High Center tractor.

Figure 25 is a rear elevation view of the High Center tractor.

Figure 26 is a front elevation view of the High Center tractor.

Figure 27 is a plan view of the High Center tractor.

In the drawings like characters of reference indicate corresponding parts in the different figures.

DETAILED DESCRIPTION OF THE ILLUSTRATED EMBODIMENTS

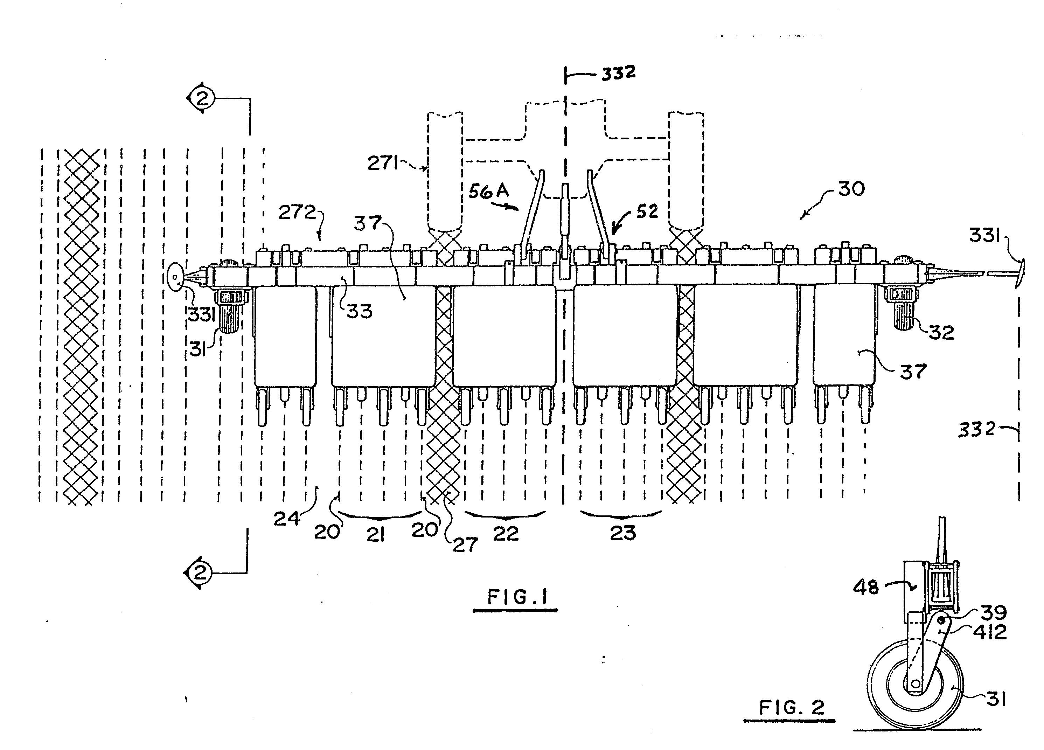

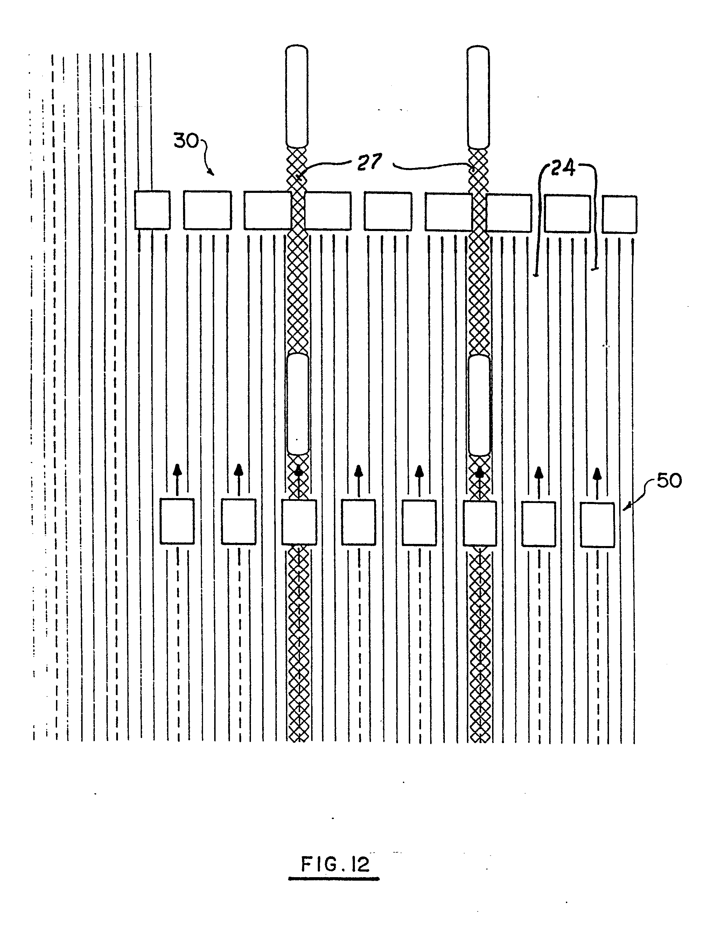

Turning firstly to Figures 1 and 12, interrow-cropping is illustrated in Figure 1 and schematically in Figure 12 with a cluster-row graindrill for planting a full stand of grass-grain crop in cluster-rows. Figure 1 shows an example with five rows in a cluster and Figure 12 shows four rows in a cluster.

Planted rows 20 are grouped in clusters 21, 22 and 23 and with a predetermined uneven spacing planted full stand density. This grouping and spacing is obtained by the use of the unit graindrill 37 laterally adjusted on the toolbar of the cluster-row graindrill 30. The system of the cluster-rows illustrated in Figures 1 and 12 utilizes clusters to provide a full stand density of the first crop as hereinbefore defined. Thus the two planted rows 20 in the cluster-row 21 may be separated by a space for example of 19 inches. The clusters may be separated by a space of 8 inches indicated at 24. Within the cluster-rows adjacent to track-guide spaces 27, there is an uneven spacing, with the first four rows moving toward the track-guide spaces 27 being separated by a 5 inch space and the fourth and fifth rows being separated by a space of only 4 inches. The purpose is to take an extra inch from each of these clusters in order to provide an oversized space 27 of 10 inches for use as wheel tracking and guide spaces. The space 27 gives extra room to accomodate the wheels of the tractor schematically indicated at 271 and also provides a visibly wider space 27 for the needed operator guidance. There may be only one of these 10 inch spaces 27 per machine pass or per swath, the width of which is defined by the width of the cluster-row graindrill indicated generally at 272. However, the provisions of two such spaces 27 per swath width is generally preferred and is illustrated. The guidance feature is best carried out when there is either one or two since this makes a readily visible row in an otherwise sea of crop. The spaces between rows in a cluster may be adjusted to be the same width or a uniform width if desired so long as the wider spaces between clusters are thereby accomodated.

Thus the spaces between rows within each cluster vary in the crop shown from 5 inches down to 4 inches. Since there is extra space at the outerside of each cluster-row, this does not crowd the crop and yields are obtained equal to that obtained where there is uniform 6 inch spacing as used conventionally.

The spaces between the clusters are arranged to be sufficiently narrow that there is considerable shading over the space by the plants and therefore a significant reduction in the productin of weeds. There is however, sufficient space for planting of the second crop in both the 8 inch spaces 24 and the 10 inch spaces 27.

Referring therefore to the cluster-row graindrill 30 of Figures 1 through 5, it will be noted initially that unit graindrills 37 extend across a plurality of cluster-rows and that the example in Figure 1 has 4 such full cluster-rows each of 5 rows in a cluster with the outside cluster-rows of the unit graindrill 37 having only 3 such rows.

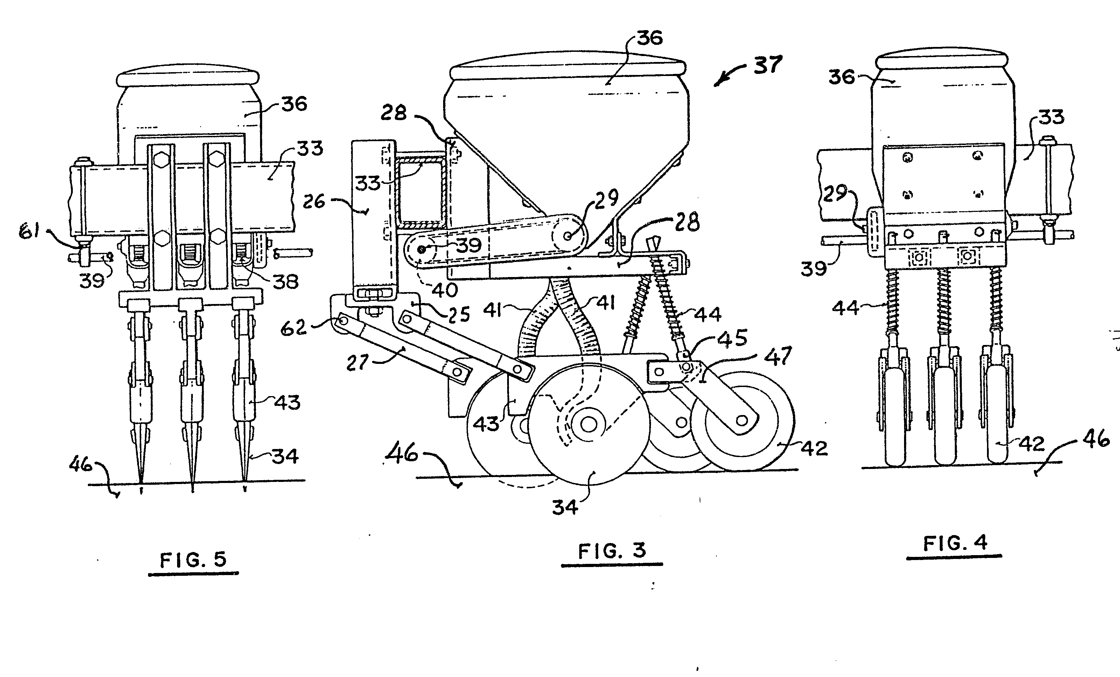

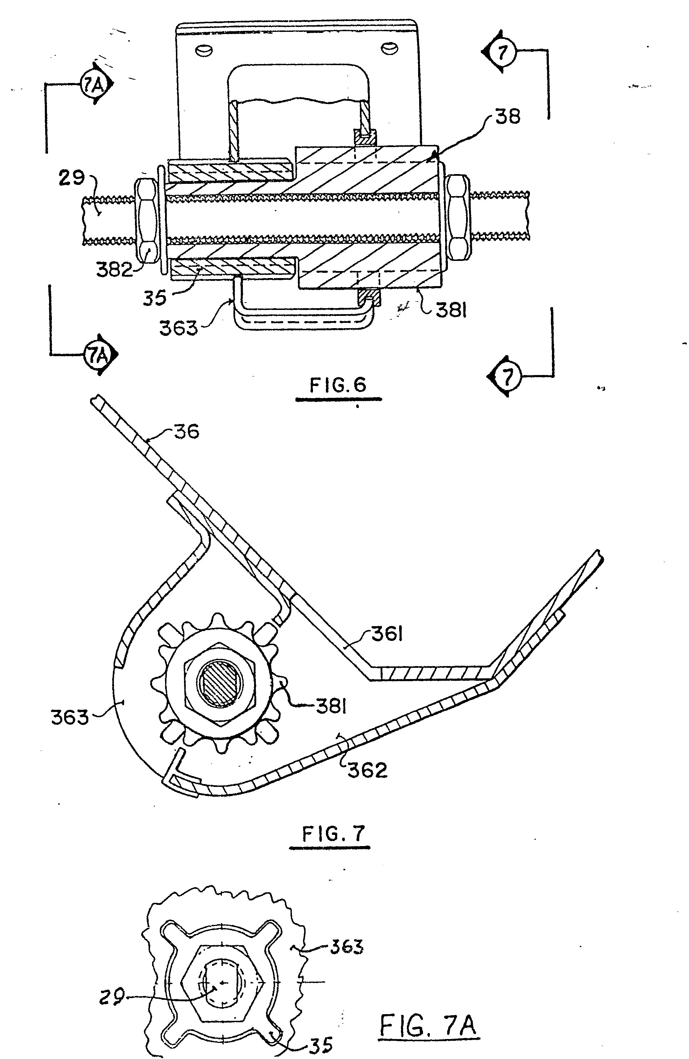

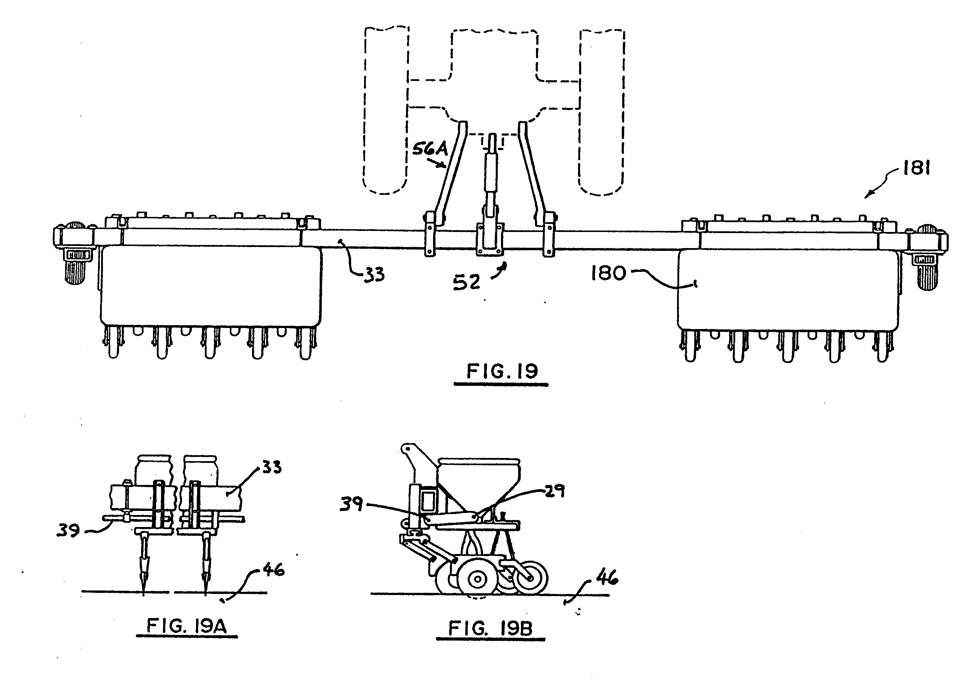

The cluster-row graindrill indicated generally at 30 includes wheels 31 and 32, a wheel bracket 48 supporting a toolbar 33 on which are mounted unit graindrills 37. These unit graindrills 37 primarily include a series of disc openers 34 provided by a pair of such discs arranged at an angle so as to open the soil for receipt of seed. A hopper frame 28 supporting a grain seed hopper 36 is provided for each unit graindrill 37 so that one hopper 36 feeds 5 ground openers 34 for all the cluster-row rows of the implement 30. The hopper 36 includes at a lower position thereof a plurality of seed metering mechanisms 38 shown schematically in Figures 5 and 19A and in more detail in Figures 6 and 7. The seed metering mechanism 38 comprises a transverse hopper shaft 29 which is driven by a chain and sprocket system 40 from a shaft 39 with support bearings 61 fixed along toolbar 33 extending to the chain and sprocket arrangement 412 (Figure 2) from the ground wheels 31 and 32. The hopper shaft 29 thus rotates at a desired rate to feed seeds into tubes 41 each of which is associated with a respective pair of ground openers 34.

A forward frame 26 is fixed to toolbar 33 forward of the hopper frame 28. Depending from the forward frame 26 are a plurality of ground opening means 34. The ground opening means 34 each include a bracket 25 which is laterally adjustable with respect to forward frame 26. Trailing arm 17 is pivotally connected to bracket 25 for angular displacement about horizontal pivot 62 on the lower end of each trailing arm 17 is a frame 43 with a pair of disc openers 34 mounted thereon.

Rearwardly of the disc opener 34 is provided a press wheel.

bracket 47 supporting a narrow press wheel 42 which closes the furrow formed in the soil by the ground openers over the planted seed. The press wheel 42 is mounted on a frame 43 supported from the toolbar 33 and is biased into contact under predetermined pressure with the ground 46 by a rod 45 and a spring 44 connected to press wheel bracket 47 and hopper frame 28.

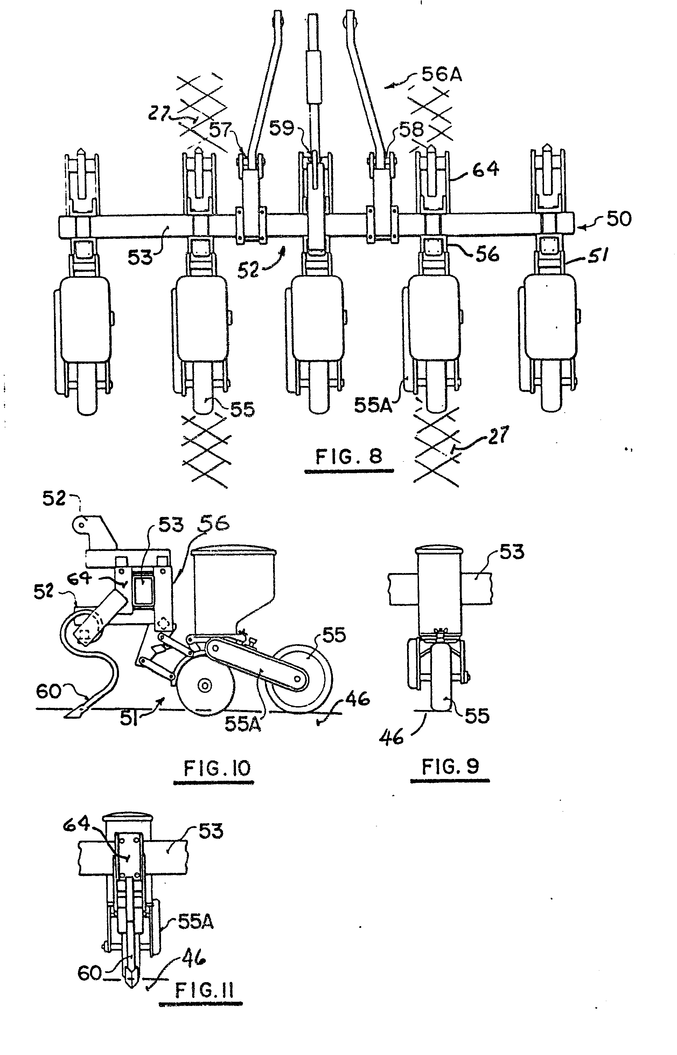

The toolbar 33 is attached to the three point hitch 56A of the tractor 271 by a conventional hitch frame 52 which controls the position of the tractor wheels relative to the spaces 27 so that the same spaced tractor wheels run along the spaces between the cluster-rows of standing grass-grain when interplanting the second crop with the no-till interplanter of Figure 8.

At each side of the toolbar 33 there is positioned a conventional disc marker 331 which provides a furrow 332 at a distance from the frame or toolbar 33 of exactly half the width of the frame so that the tractor operator may follow this furrow 332 when planting the succeeding round or swath.

Turning now to Figures 6 and 7, there is shown in Figure 7 the lower portion of the hopper 36 which has an opening 361 through which seeds can fall into a chamber 362 for feeding by the feed mechanism 38. The feed mechanism 38 comprises a fluted roller 381 mounted on the shaft 29 extending across the unit graindrill 37. The fluted roller 381 is secured to the shaft 29 by a pair of nuts 382 and is axially adjustable in position relative to the shaft 29. The fluted roller 381 includes a portion having 12 flutes which co-rotates with the shaft 29 so as to feed seeds from the chamber 362 into the seed drop tube 41 and a non-rotating blanking off fluted roller 35 having 4 flutes. The width of the chamber 362 is confined by walls 383 shown in Figure 6 which also confine the axial effect of the fluted roller 381. Thus by adjusting the axial position of the fluted roller 381 relative to the walls 363, the effective amount of the 12 fluted part can be adjusted to vary seeding rate. This adjustment can be carried out individually for each of the ground openers 34 by actuating the nuts 382. It will be noted that the outside unit graindrills 37 of the implement 30 of Figure 1 include only 3 rows as opposed to the 5 rows of the intermediate clusters. In addition the seeding rate of the furthermost outside row is reduced to an amount of the order of one-half of that of the other graindrills. Thus the grower can in the next swath of the implement 30 traverse the furtherest outside unit graindrill 37 along the row previously planted by the last swath of the furthermost outside graindrill whereby two and one half further rows are added to the two and one half previously planted to create a cluster of 5 rows similar to those formed by the intermediate unit graindrills 37. This arrangement allows the grower to more accurately control the spacing between the swaths since an inaccuracy obtained by errors in following the centerline formed by the disc 331 are taken up by a variation in seeding rate within a cluster-row rather than in the space between two clusters thus allowing weeds to grow.

Turning again to Figure 12, the position of a row-crop no-till interplanter 50 is shown schematically in the system whereby rows of a row-crop (shown schematically) as defined previously are planted in the spaces 24 and 27 between the cluster-rows of grass-grain.

It will also be noted in Figure 12 that there are only four rows in each cluster-row. In this case the outside unit graindrills include three ground openers with the outside two adjusted for reduced seeding rate.

Figures 8 through 11 show the no-till interplanter 50 for use in this invention. There are many similarities to conventional planters, for example, the no-till interplanter 50 may employ conventional planter units 51. The no-till interplanter 50 illustrated may comprise a toolbar mounting frame 52 having a tranverse toolbar 53. The frame 52 centrally located on toolbar 53 is supported by press wheels 55 (and by the tractor, through its three point hitch 56A). The press wheels 55 are used to close the soil over the seed. The planter units 51 are mounted on a bracket 56 which lies behind the toolbar 53. The main frame 52 is attached to a three point hitch 56A of a tractor, with two points 57 and 58 on the lower level and one point 59 thereabove. This provides a basically rigid and certain attachment. A key feature is that the interplanter toolbar frame 52 is located higher on the three point hitch mounting points 57, 58 and 59 than is usual so that the parts of the machine which cross over the first crop are generally higher than the first crop at this second planting time and bridge over it, with some bending of the grain. Planter bracket 56 extends downward from the toolbar for attachment of the planter unit 51 mechanism below the toolbar to elevate the toolbar with respect to the ground.

The toolbar 53 carries a series of Danish S-tines supported by bracket 64 which are in line with the unit planters 51 so as to provide a certain amount of tilling in this generally no-till system of interplanting, the tilling being specifically limited to that for the interplanter's second crop and this localized tilling does not interfere with the first crop. The conventional Danish tines 60 may be used or other kinds of tines may be used, including rotating or power-driven tines. Coulters may be used instead of tines if desired.

The planter units 51 include the press wheels 55 which drive the planting mechanism through a chain drive 55A. The wheels 55 are aligned with the Danish tines 60 and they may be evenly spaced apart in the rows at eighteen inch intervals, for example, or at other intervals matching the spaces provided by cluster-row graindrill 30 for the first crop. There is no difference otherwise so far as the planter units are concerned.

The no-till interplanter 50 thus tills the ground and plants the seed and firms it in at a good moisture depth, to enhance seed germination and plant emergence.

The tractor is preferably provided with narrow width tires so that they can more readily be kept within the wheel spaces 27. Grain parting wheel guards are preferably provided to deflect gently plant portions from the wheel spaces 27.

In Figure 1 the example of 5 rows in a cluster and the exampled spaces indicated above can of course be altered. The use of 3 or more rows in a cluster-row provides the umbrella effect which shades the spaces 24 and 27 and prevents weed growth whereas only 2 rows of grass-grain cannot provide the umbrella effect.

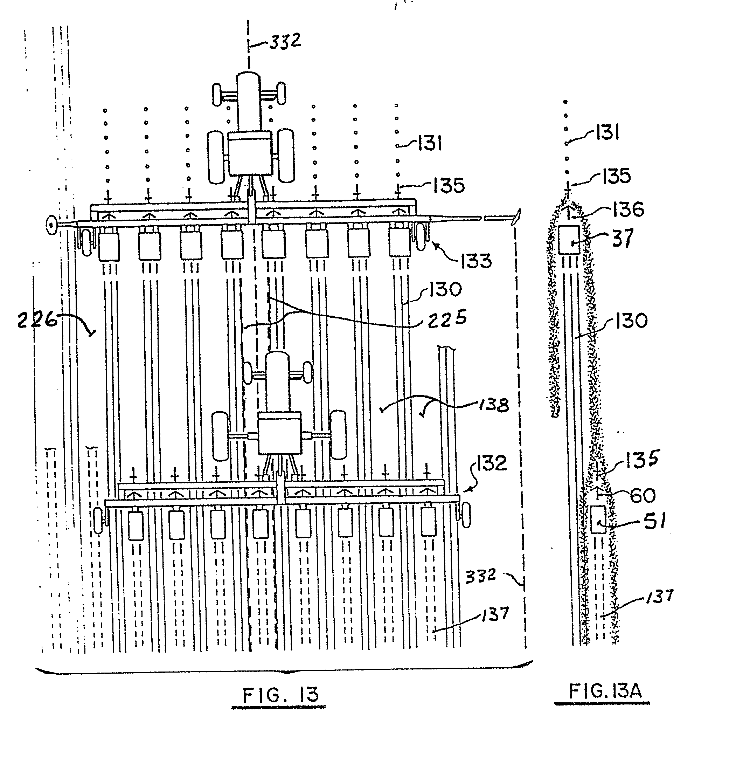

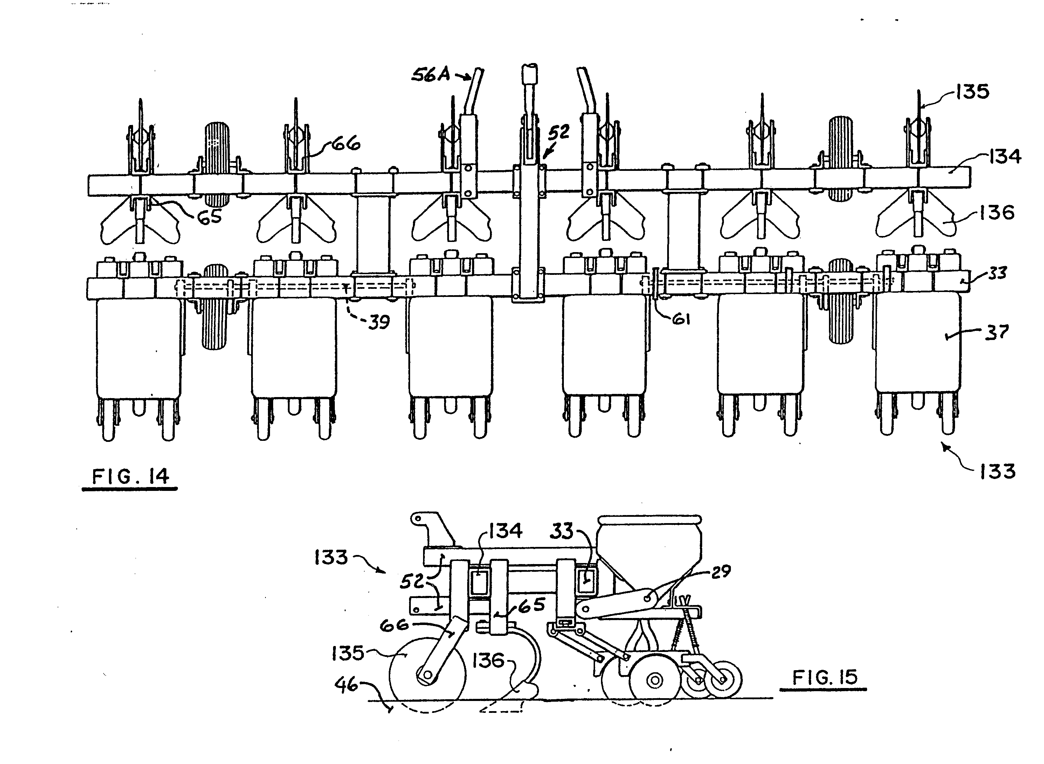

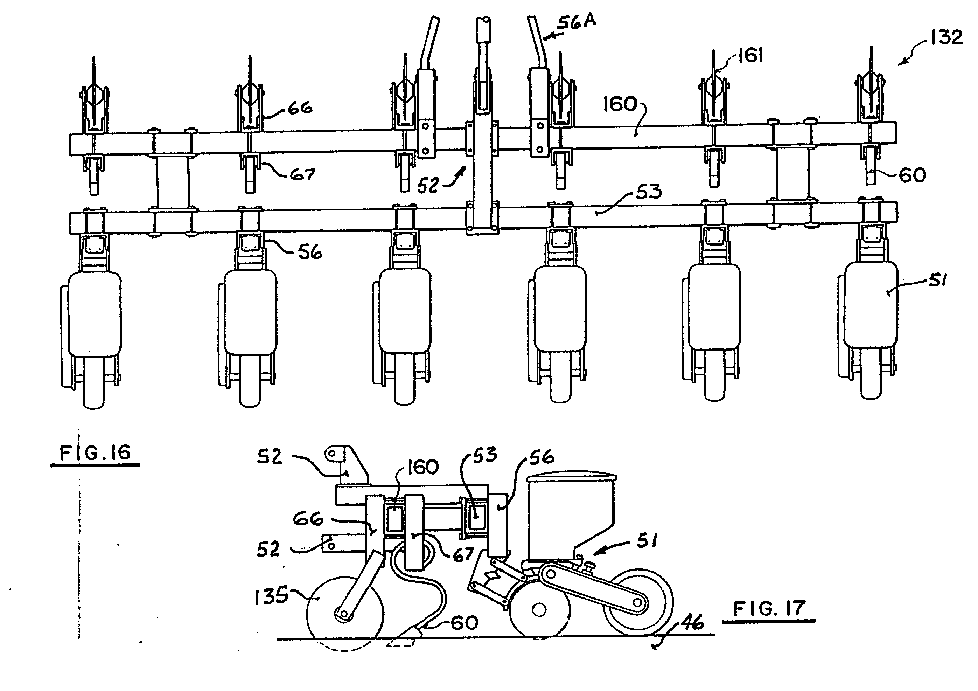

Turning now to Figures 13 and 13A, these show schematically the system described herein previously as Double-Cover Intercropping. The Cluster-row graindrill 133 used for this system is illustrated in Figures 14 and 15 and the interplanter 132 in Figures 16 and 17. In this system the spacing of the individual graindrill units 37 on the cluster-row graindrill 133 is such that the planting is less than a full stand density. This provides a wider spacing between the rows within the cluster-row, and wider spaces 138 between the cluster-rows themselves. The spaces 138 therefore can be used to receive a single row 131 or

- 21 -

Twin-rows 137 of a row-crop as shown. It will be noted that the planting of the cluster-rows 130, as shown in Figure 13A, takes place in the previous year's row-crop residue 131, a single row-crop row, so that in effect the grass-grain crops 130 are rotated with the Twin-row 131 row-crop rows 137 and the single row-crop rows 131.

Figure 13 illustrates schematically the chonological operations using the cluster-row graindrill 133 illustrated in more detail in Figures 14 and 15 and the no-till interplanter 132 which is illustrated in more detail in Figures 16 and 17. The wheel spacing of the tractor and the support wheels of the implement will be noted in relation to both the cluster-row graindrill 133 and the no-till interplanter 132 whereby the wheels straddle the growing crop and run only between the cluster-rows of grass-grain and the interplanters swath center is one-half row adjacent to the cluster-row graindrill swath center.

The cluster-row graindrill 133 is very similar to that shown in Figures 1 through 5 but is modified in that an additional toolbar 134 carries for each unit graindrill a coulter 135, a front coulter bracket 66, tine 136 and rear till bracket 65 which, as shown in Figure 13A, acts to till the residue 131 out of the path of the cluster-row graindrill 133 allowing it to operate in the manner described in relation to the embodiment of Figure 1.

The no-till interplanter 132 illustrated in Figures 16 and 17 is substantially the same as that disclosed in Figures 8 through 11, except that an additional toolbar 160 is added for supporting the tine 60 and rear tine bracket 67 also a coulter 135 and bracket 66. The no-till interplanter 132 operates substantially as described in relation to the earlier figures with the additional tilling prior to the interplanter to cut through the residue of the last seasonal crop as shown in Figure 13A.

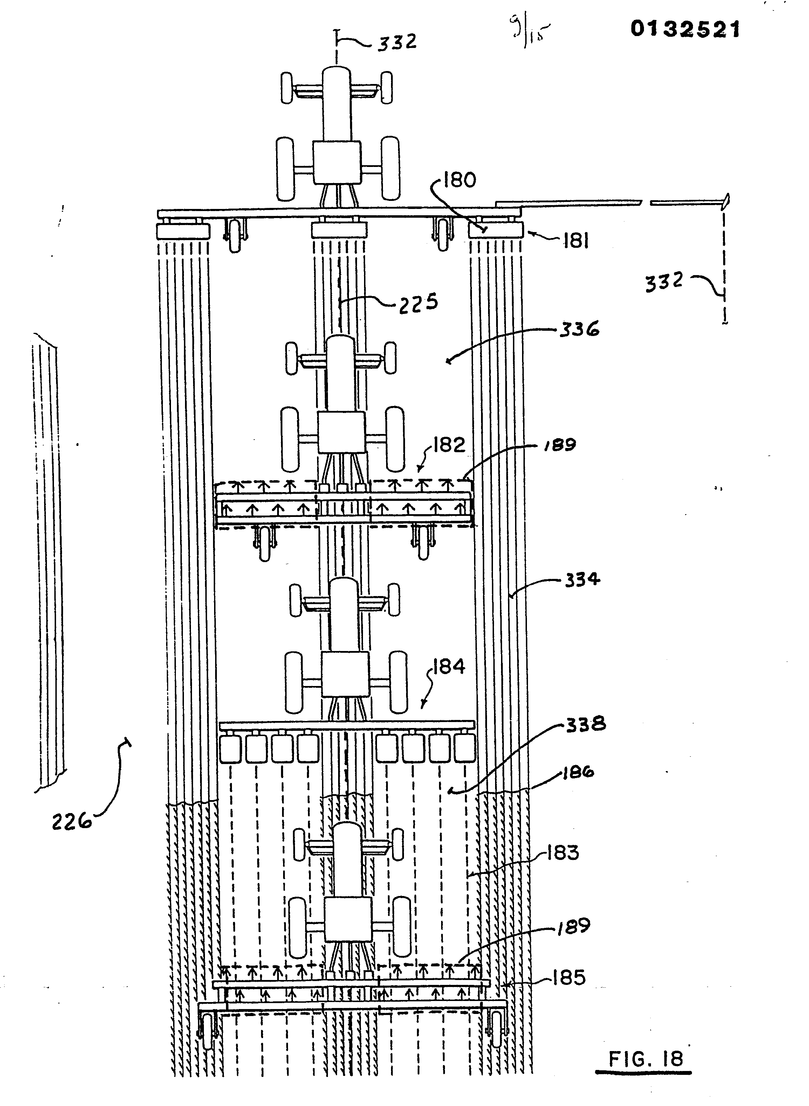

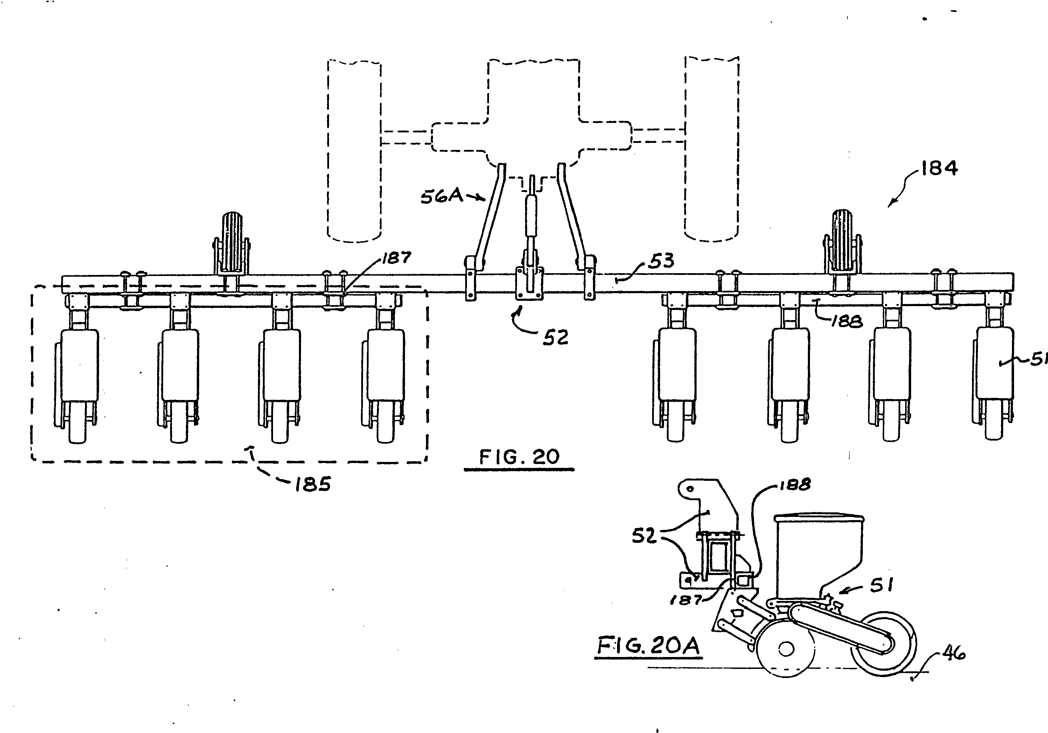

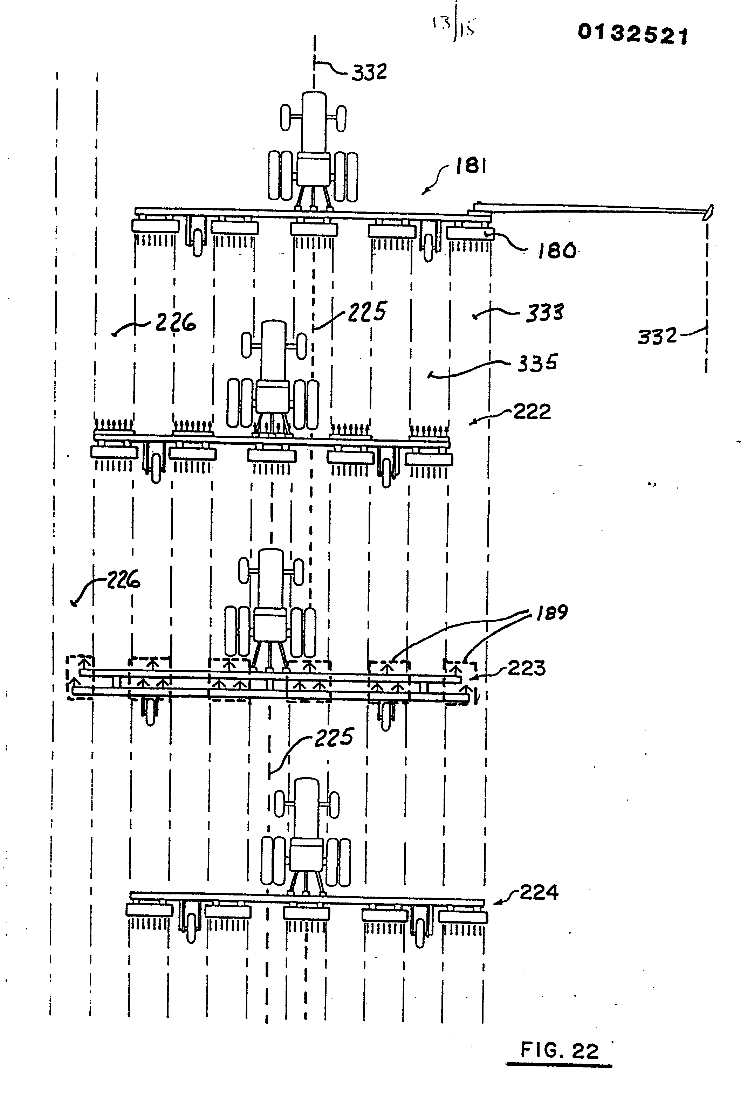

Turning now to Figure 18, there is shown schematically the system described hereinbefore known as Modular Single-Double Intercropping. The system uses a modular graindrill 181 with modular unit graindrills 180 mounted thereon providing modular cluster-rows of grass-grain. Subsequent to planting of the first grass-grain crop in the modular cluster-rows 334, the modular spaces 336 between the cluster-rows 334 are tilled using a Modular Field Cultivator 182 with modular tillage tools 189 mounted thereon, shown schematically in Figures 18 and 22. The modular tillage tools could be a tandem disc, a one way disc, chisel plows, rototillers, cultivators, flex harrow and the like to prepare the spaces 336 for planting a row-crop crop 183 using a modular interplanter (Figure 20) as indicated at 184. In most instances, the grass-grain crop would be harvested at 186 and the harvesting machine wheel tracks would straddle the planted row-crop crop rows 183 or track on the modular cluster-rows of grass-grain stubble 334. In addition the modular row-crop rows 183 can be cultivated using a modular cultivator 185 acting only upon the spaces 338 between the row-crop rows 183 and between the modular cluster-rows of grass-grain 334 thus leaving the stubble from the cluster-rows of grass-grain 334 to protect the soil from erosion, as previously explained.

The modular unit graindrill 180 is shown in more detail in Figures 19, 19A, 19B and has the same seed metering improvements as shown in Figures 6 and 7.

The modular interplanter 184 is shown in more detail in Figure 20. The two modular planter units 185 have shown four planter units 51 mounted on a bar 188. Bar 188 therefore is mounted to toolbar 33 with laterally adjustable clamps 187.

Turning now to Figure 22, there is shown schematically the system described herein previously as Modular Fallow Farming. In this system modular cluster-rows of grass-grain 333 are planted using the modular graindrill 181 such that the density of crops within the modular cluster-row 333 is a full stand density and the spacing 335 between the cluster-rows 333 is equal to width of the modular cluster-row of grass-grain 333. It will be noted particularly that the width of the modular cluster-rows 333 and modular spaces 335 is a tractor's 'track-straddle' or a tractor's 'track-within' width.

Figure 22 illustrates again schematically in chronological order the farming system wherein prior to the first pass of the modular graindrill 181, the land is previously tilled so that the modular graindrill 181 acts merely to plant the grass-grain in modular cluster-rows 333 equally spaced apart a modular space 335. The second step is the harvesting of the modular cluster-rows 333, and comes intermediate the second pass illustrated at 222 where the second annual planting takes place in modular spaces 335 intermediate the previous annual modular cluster-rows 333 leaving the stubble from the first annual planting untilled to lie fallow during the second year. The no-till modular graindrill 222 therefore includes the no-till tines similar to those previously illustrated in Figures 14 and 15. Modular Fallow tilling using sweeps at 223 can take place either prior to harvesting the second annual crop or sebsequent to the harvesting the second annual crop and acts to till the first annual planting of cluster-rows shown leaving the stubble from the second annual planted cluster-rows to protect the land. Subsequently, the third annual planting indicated at 221 takes place upon the first modular cluster-rows 333 from the first annual planting and this Modular Fallow Farming continues in the same cycle.

Figures 13, 18 and 22 show a thickly or a thinly planted row within the cluster and modular cluster-row of grass-grain central to the swath at 225. Whether this marker row is standing grain or standing stubble, it acts as a guide for the tractor operator to match up sequential swath integrity. Between swaths of first planted grass-grain there exists a variance space 226 when Double-Cover, Single-Double, and Modular Fallow Farming intercropping. This is the reason for maintaining first and second planting swath integrity.

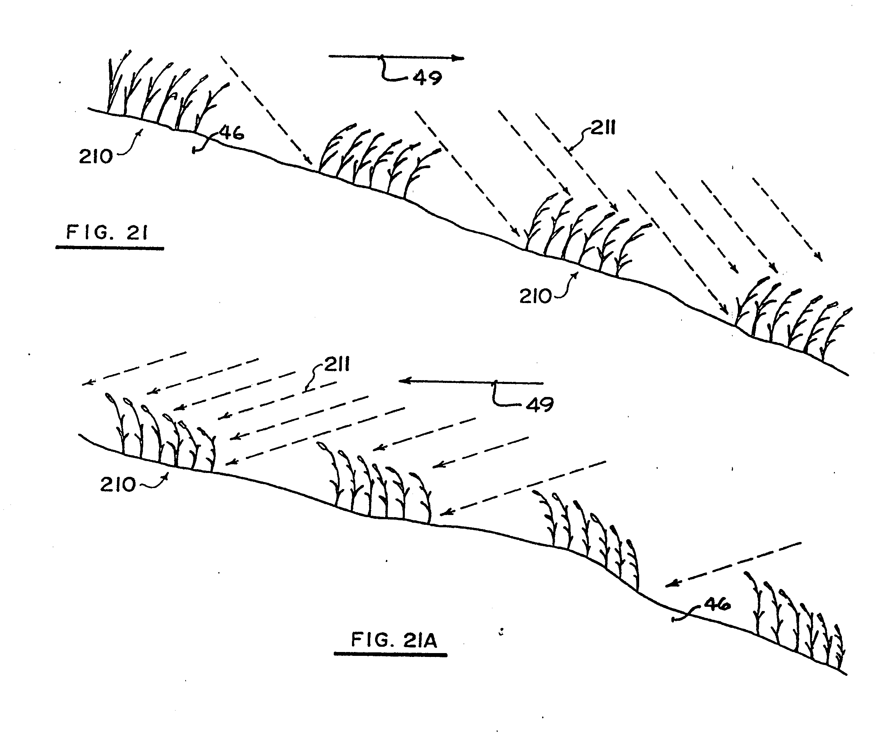

Figures 21 and 21A illustrates the ground sheltering effect of the grass-grain cluster-rows 210. Only a small percentage of the rain drops 211 impact the soil during a heavy thunderstorm. Rain drop impact action and accumulated top ground water cascading down a long slope is the problem. Cluster-row intercropping closes the down-the-slope and across-the-field watershed-above distance to a few inches. Modular cluster-row intercropping therefore narrows the down-slope distance to a few feet. Top ground water therefore perks into the subsoils when it reaches the cluster-rows of grass-grain at 210.

Then too, the grass-grain stubble remaining after harvest and no-till planted therein will elevate the moving air blast 49 thereby providing a safe, less turbulent, cushion of air over the remaining exposed soils.

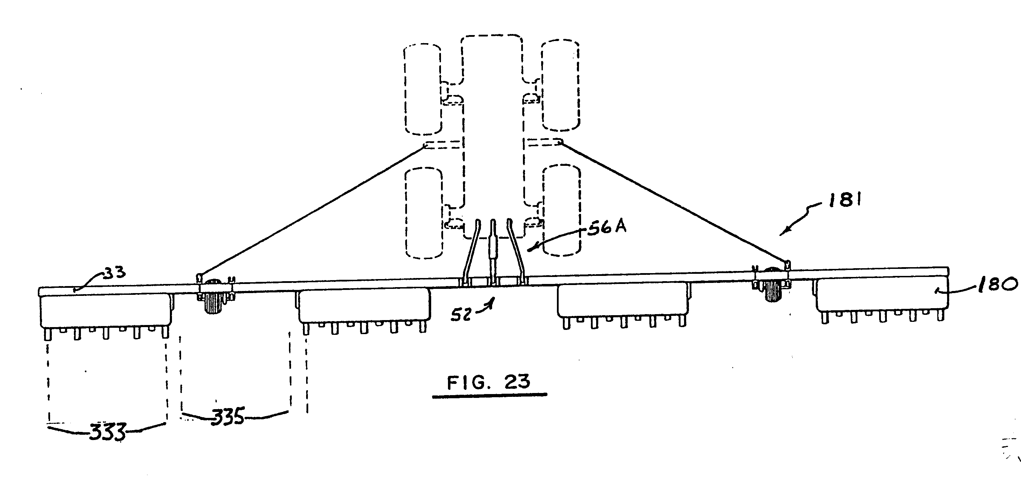

Figure 23 shows a modular graindrill 181 with four modular unit graindrills 180 mounted thereon spaces apart a modular space 335 the same width as the modular unit graindrills 333 to be used for Modular Fallow Farming. The tractor, shown schematically, is of a conventional type with four wheel drive and four wheel auto-steerable.

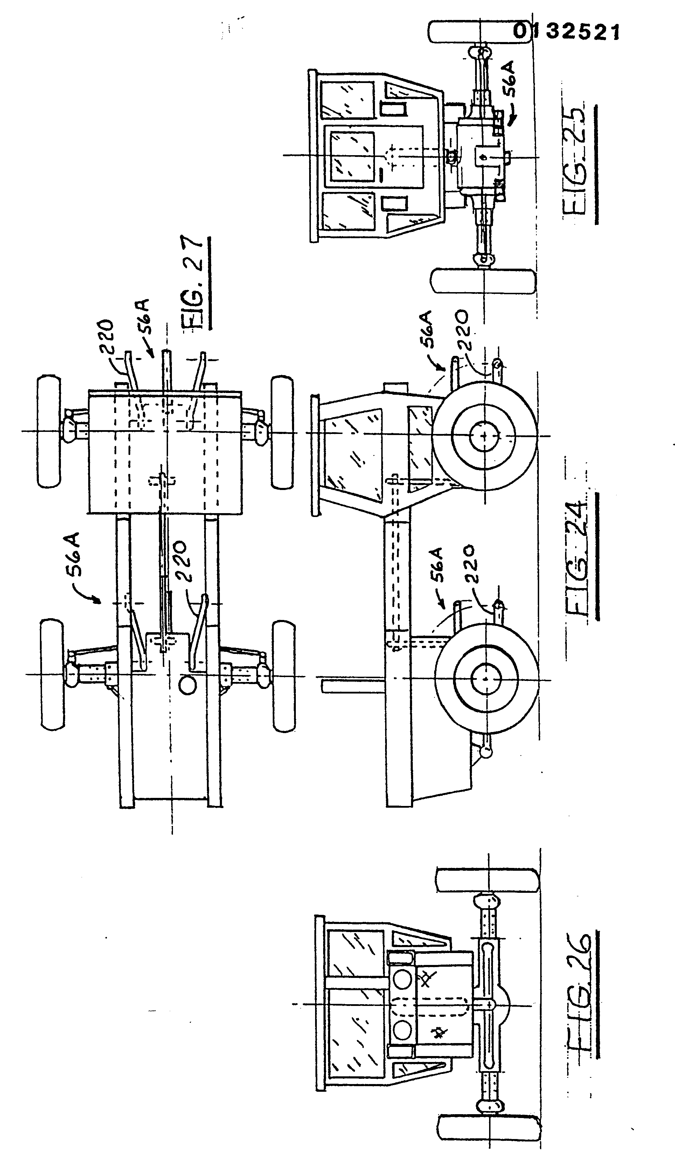

Figures 24 through 27 represent a high-center frame tractor with a three point hitch 56A shown at 220. The auto-type steering can be front axle only, for working the gentle sloping farmlands or front and rear axle steering for working the steeper hillside slopes.

The invention as described above therefore provides a number of major improvements in intercropping techniques which can be used in the four separate farming systems described, one of which is chosen in dependence upon the conditions in the area concerned. The whole system described in this patent provides therefore a farming system which if followed will reduce or prevent soil erosion.

ates are based on normal seedbeds and on use of normal size, good quality seed. Rates used will vary greatly depending on seed cost, desired stand expected mortality, emerging ability, seed weight, seed germination, seedbed condition, depth of planting, and planting equipment.

| rop | Bushel weight (pounds)[1] | Rate/acre (pounds) | Rate (seeds) | Date |
|---|---|---|---|---|
| arley | 48 | 85 | 28/square foot | Early spring |
| orn | 56 | 17 | 24,000/acre | Late April or early May |
| ield Bean Black turtle soup | 60 | 45 | 105,000/acre | May 20 to June 15 |
|   Great northern | | 90 | 90,000/acre | |
|   Kidney | | 90 | 80,000/acre | |
|   Navy | | 45 | 105,000/acre | |
|   Pinto | | 75 | 90,000/acre | |
|   Small Red | | 75 | 100,000/acre | |
|   Small White | | 35 | 105,000/acre | |
| lax | 56 | 42 | 85/square foot | April 15 to May 15 |
| orage Grasses (perennial) | If mixed with legume, sow at time indicated for the legume. | | | |
|   Bromegrass alone | 14 | 16 | 50/square foot | Early spring or summer |
|     in mixtures | | 10 | 31/square foot | |
|   Orchardgrass in mixtures | 14 | 2 | 30/square foot | Early spring or summer |
|   Reed canarygrass alone | 46 | 7 | 85/square foot | Early spring or summer |
|     in mixtures | | 5 | 60/square foot | |
|   Tall fescue in mixtures | 25 | 4 | 21/square foot | Early spring or summer |
|   Timothy in mixtures | 45 | 3 | 85/square foot | Early spring or summer |
| orage Legumes (perennial) | | | | |
|   Alfalfa alone | 60 | 11 | 50/square foot | Early spring to August 10 |
|     with grass | | 7 | 32/square foot | |
|   Alsike clover in mixtures | 60 | 2 | 30/square foot | Early spring to August 10 |
|   Birdsfoot trefoil alone | 60 | 7 | 60/square foot | Early spring or summer |
|     with grass | | 4 | 34/square foot | |
|   Ladino clover in mixtures | 60 | 1 | 18/square foot | Early spring to August 10 |
|   Red clover alone | 60 | 9 | 50/square foot | Early spring to August 10 |
|     with grass | | 5 | 30/square foot | |
| at | 32 | 80 | 28/square foot | Early spring |
| ye | 56 | 60 | 25/square foot | September |
| orghum 18- to 40-inch rows | 56 | 10 | 150,000/acre | May 20 to June 5 for grain |
|   6- to 14-inch rows | | 15 | 5/square foot | |
| oybean 6- to 8-inch rows | 60 | 80 | 3/foot of row | May 5 to May 25 |
|   20-inch rows | | 65 | 7/foot of row | |
|   30-inch rows | | 55 | 9/foot of row | |
|   40-inch rows | | 50 | 11/foot of row | |
| unflower Nonoilseed | 24 | 4 | 17,000/acre | May |
|   Oilseed | 27 | 3 | 23,000/acre | |
| heat Durum | 60 | 90 | 25/square foot | Early spring |
|   Hard red spring | | 80 | 28/square foot | Early spring |
|   Winter | | 75 | 25/square foot | August 20 to September 20 |
| ther Crops | | | | |
|   Annual canarygrass | 50 | 30 | 40/square foot | Early spring |
|   Buckwheat | 48 | 50 | 17/square foot | June 15-July 20 |
|   Field pea | 60 | 180 | 9/square foot | Early spring |
|     With 1½ to 2 bushels of oat | | 70 | 4/square foot | |
|   Fababean-medium size | 60 | 180 | 5/square foot | Early spring |
|     With 2 bushels of oat | | 60 | 2/square foot | |
|   Millet Foxtail | 48 | 15 | 75/square foot | June 15-July 15 |
|     Proso | 56 | 20 | 30/square foot | June 15-July 15 |
|   Mustard | 56 | 13 | 25/square foot | May |
|   Rape Forage | 50 | 6 | 20/square foot | Early spring with oat |
|     Oilseed | 50 | 8 | 25/square foot | May |
|   Sudangrass 18- to 40-inch rows | 40 | 10 | 25/foot of row | May 20 to June 10 |
|     6- to 14-inch rows | | 20 | 20/square foot | |
|   Sweetclover | 60 | 10 | 55/square foot | Early spring |

[1]U.S. legal if established. If not established, weight given is that most widely accepted in the United States.

he University of Minnesota, including the Agricultural Experiment Station, is committed to the policy that all persons shall have equal access to its rograms, facilities, and employment without regard to race, creed, color, sex, national origin, or handicap.

Example of specific crop planting rates for a particular geographical area. These seeding rates are considered to be FULL STAND planted.

1. A method of soil conservation farming comprising,

one, of planting of cluster-rows and

two, planting modular cluster-rows of a grass-grain with spaces there-between, and

having at least one center-row in each cluser,

interplanting a second crop in said spaces,

harvesting the first planted crop when it reaches maturity, and

harvesting the second crop when it reaches maturity.

2. A method of soil conservation farming comprising,

growing grass-grain terraces arranged to shelter the soil from falling rain drops,

to stop rain water run-off and

to provide the soil a shelter from the wind.

3. A method of soil conservation intercropping comprising,

clustering a group of grass-grain rows slightly closer together than sole cropping density stand with spaces there-between said clustered-rows as a first planted crop,

interplanting a row-crop crop in said spaces of the emerged cluster-rows of grass-grain, both plantings having the same swath width,

the first planting having a visual marking means central to its swath,

planting and harvesting both crops separately without trampling the companion growing crop with wheel tracks.

4. A method of cluster-row intercropping comprising,

planting a plurality of cluster-rows of grass-grain the width therefore being a track width of the subsequent harvesting machine's tire with spaces between adjacent rows of said cluster-rows,

interplanting the said spaces between the said cluster-rows of grass-grain with a one, one row;

two, a Twin-row of a row-crop crop,

both plantings having the same patterns across the field row to row and swath to swath.

5. A method of cluster-row interrow-cropping comprising,

planting full stand grass-grain cluster-rows, first planting, with visible tracking-guide spaces there-between,

said tracking-guide spaces being centered on the swath,

said tracking-guide and other spaces within the swath being equi-distantly apart from swath to swath across the field,

said cluster-rows of grass-grain each having at least three rows planted in them to provide an umbrella of vegetation over said spaces,

said cluster-row centers being equi-distant from each other in the swaths and from swath to swath across the field,

said row-crop row width being adjustable by adjusting the width between the rows of the said cluste-rows of first planted grass-grain and/or by adding to or reducing the number of rows to each cluster-row planted, the centers of which remain equi-distant from each other with said spaces between each cluster-row,

said cluster-rows being spaced apart at such a distance that the centers of any two cluster-rows will have a center distance the width of the harvesting machine tire tracking width when harvesting the first seasonal crop planted,

planting both crops, the swath centers of each being the same, allowing the second crop to be planted in either direction within the first planted swath,

interplanting said full stand second crop, the row-crop crop after emergence of first planting, in spaces provided between said cluster-rows of grass-grain using no-till tillage ahead of each row planted,

harvesting said first planted crop when mature, by tracking the grass-grain stubble rows, and

then harvesting said second planted crop when mature.

6. A method of cluster-row intercropping (double-cover) comprising,

planting less than a full stand of said cluster-rows with spaces between grass-grain in cluster-rows, the centers of which are equi-distant apart, within each swath and from swath to swath, and

having at least three rows planted within each said cluster-row to provide a partial umbrella of vegetation over said spaces,

said cluster-rows spaced apart at such a distance that any two will have similar center distances as the centers of the tracking-width of the harvesting machine that harvests the first planted grass-grain crop,

a central-to-the swath guide space or cluster-row visibly wider or narrower than other spaces or cluster-rows in the swath provided when planting the first crop grass-grain cluster-rows,

interplanting row-crop crop in said spaces between said cluster-rows, with the same swath width as the cluster-row planting, the swath center of which is planted one-half row adjacent to the swath center of the first planted cluster-row crop, said row-crop row width being adjustable by widening or narrowing the width between the rows of the said cluster-rows and/or by adding to, or reducing the number of rows in each cluster-row of grass-grain, the centers of which remain equi-distant from each other,

harvesting the said first planted crop when mature, then

harvesting the said second planted crop when mature.

7.    A method of modular cluster-row intercropping comprising,

planting a full stand of grass-grain in a modular cluster-row, the width of which is; one, a tractor-straddle width, two, a tractor track-within width,

said cluster-row swath-center marked with one, an extra planted row; two, a sparsely seeded row or a thick seeded row in the first seasonal planted modular grass-grain cluster-row,

interplanting the second crop rows in modular rows, planted in said modular spaces, one, in the same growing season; two, the following growing season.

8.    A method of modular cluster-row intercropping (single-double) comprising,

planting modular cluster-rows grass-grain using a narrow modular row for gentle slope contour farming, and the wider modular row for steeper hillside contour farming,

interplanter modular rows of grass-grain using the narrow modular rows for steeper hillside contour farming, and the wider modular rows for gentle slope contour farming,

harvesting said first planted crop when it reaches maturity and

harvesting second planted crop when it reaches maturity.

9.    A method of modular cluster-row intercropping (modular fallow) comprising,

planting modular cluster-row grass-grain with modular spaces there-between,

fallow-tilling said modular spaces,

both said modular cluster-rows and said modular spaces being the same width; one, wide for flat or gentle rolling farmland and; two, the narrow width for steeper hillsides, farmed on the contour of the slope; and

fallow-cropping said modular spaces then

harvesting the planted modular rows of grass-grain when mature.

10. The method according to Claim 4 which includes planting full stand grass-grain cluster-rows with visible tracking-guide spaces there-between, said tracking-guide spaces being centered on the swath, said tracking-guide and other spaces within the swath being equi-distantly apart space to space, and from swath to swath across the field, said cluster-rows of grass-grain each having at least three rows planted in them to provide an umbrella of vegetation over said spaces, said cluster-row the center of which being equi-distant from each other in the swaths and from swath to swath across the field,

interplanting row-crop rows within the said spaces after emergence of said grass-grain cluster-rows, said row-crop row width being adjustable by adjusting the width between the rows of the said cluster-rows and/or by adding to or reducing the number of rows to each cluster-row planted, the centers of which remain equi-distant from each other after planting both crops, the swath center of each being the same, allowing the same crop to be interplanted in either direction of the first planted swath,

interplanting said second crop a row-crop full stand in spaces provided between said cluster-rows using a no-till tillage each associated with a respective row planted,

harvesting said first planted crop when mature, by tracking the stubble of said cluster-rows with the harvesting

machine, and then                                    0132521

harvesting said second crop when mature.

11.   The method according to Claim 4 which includes planting less than a full stand of grass-grain in said cluster-rows with spaces between said cluster-rows, the said cluster-rows centers of which are equi-distant apart, within each swath and from swath to swath, and having at least three rows planted within each said cluster-row to provide a partial umbrella of vegetation over said spaces; a central-to-the swath; one, a thick or thin planted row within a cluster-row; two, a guide space visibly wider or narrower than other spaces in the swath provided when planting the first crop grass-grain cluster-rows,

interplanting a row-crop crop in said spaces between said cluster-rows, with the same swath width as the said cluster-row planting, the swath center of which is planting one-half row off the swath center, of the first planted said cluster-row crop, said row-crop row width being adjustable by; one, widening or narrowing the width between the rows of the said cluster-rows, two, by adding to, or subtracting from the existing number of rows in each cluster-row of grass-grain, the centers of which remain equi-distant from each other,

harvesting the said first planted crop when mature, then

harvesting the said second planted crop when it reach maturity.

12.   The method according to Claim 7 which includes planting modular cluster-rows grass-grain using a narrow modular row for gentle slope contour farming, and the wider modular row of steeper hillside contour farming,

interplanting modular rows of grass-grain with a row-crop crop using the narrow modular rows for steeper hillside contour farming, and the wider modular rows for gentle slope contour farming,

harvesting said first planted crop when it reaches maturity, then

harvesting second planted crop when it reaches maturity.

13. The method according to Claim 7 which includes planting modular cluster-row grass-grain with modular spaces there-between, fallow-tilling said modular spaces, both said modular cluster-rows and said modular spaces being the same width; one, the modular wide width for flat or gentle rolling farmland and; two, the modular narrow width for steeper hillsides, farmed on the contour of the slope, and then

harvesting the planted modular rows of grass-grain when mature.

14. A modular tilling apparatus for tilling modular spaces between modular rows of standing grass-grain comprising,

an elevated transverse support toolbar,

a standard three point hitch for mounting said toolbar on a tractor or the like,

ground wheels for supporting said toolbar, for conveying the same over a field to be tilled,

a plurality of modular tilling tools adjustably attached to said toolbar and adjustable along said toolbar to vary the spacing between the tilling tools, for fallowing the modular spaces and cultivating row-crop crops growing in the modular spaces between modular rows of grass-grain.

15. An Interrow-cropping intercropping apparatus comprising,

a tractor,

a toolbar,

a standard three point hitch for mounting said toolbar to said tractor for conveying the same over the field,

a cluster-row graindrill,

a plurality of unit graindrills adjustably attached to said toolbar and adjustable along said toolbar to vary the spacing between the unit graindrills, said unit graindrills arranged to plant a full stand of grass-grain cluster-rows, each of which being the width of a harvesting machine tire with spaces there-between, means to adjust two symmetrically central-to-the swath said spaces slightly wider than the other said spaces in the swath;

a no-till interplanter,

a plurality of planter units adjustably attached to said toolbar and adjustable along said toolbar to vary the spacing between the said planter units, said planter units arranged to plant a full stand of row-crop crop in said spaces provided preceeding the harvest of said grass-grain,

a harvesting machine; one, to harvest said grass-grain crop tracking the said grass-grain cluster-rows; two, to harvest said row-crop crop.

16. A Double-Cover intercropping apparatus comprising,

a tractor,

a toolbar,

a standard three point hitch for mounting said toolbar to said tractor for conveying the same over a field,

a no-till cluster-row graindrill,

a plurality of unit graindrills adjustably attached to said toolbar and adjustable along said toolbar to vary the spacing between the unit graindrills, said unit graindrills arranged to plant less than a full stand of grass-grain in cluster-rows each of which being the width of a harvesting machine tire with spaces there-between, means to mark a swath-center cluster-row;

a no-till interplanter,

a plurality of planter units adjustably attached to said toolbar and adjustable along said toolbar to vary the spacing between the said planter units, said planter units arranged to plant a full stand of row-crop crop in said spaces provided in the stand of said grass-grain crop;

a harvesting machine; one, to harvest said grass-grain crop tracking the said grass-grain cluster-rows; two, to harvest said row-crop crop.

17. A Double-Cover intercropping apparatus comprising,

a tractor,

a toolbar,

a standard three point hitch for mounting said toolbar to said tractor for conveying the same over a field,

a no-till cluster-row graindrill,

a plurality of unit graindrills adjustably attached to said toolbar and adjustable along said toolbar to vary the spacing between the unit graindrills, said unit graindrills arranged to plant less than a full stand of grass-grain in cluster-rows each of which being the width of a tractor tire with spaces there-between, means to mark a swath-center cluster-row;

means to interplant second seasonal crop,

a harvesting machine, to harvest said grass-grain crop tracking the said grass-grain cluster-rows when mature, to harvest second planted crop when mature.

18. The Double-Cover intercropping apparatus of Claim 17 wherein the means to interplant second seasonal crop is a no-till cluster-row graindrill.

19. Cluster-row graindrill apparatus comprising,

a transverse support toolbar,

means for mounting said toolbar on a tractor or the like for conveying the same over a field to be planted,

a plurality of unit graindrills adjustably attached to said toolbar and adjustable along said toolbar to vary the spacing between the units, each unit graindrill including means for containing seed having a transversely spaced series of seed-delivery openings,

means for metered feeding of seeds therefrom, and

a number of ground opener assemblies transversely serially arranged, each ground opener assembly including means for opening the ground, means for delivering the metered seed into the openings thus created, and means for closing the ground over the seeds thus deposited.

20. The cluster-row graindrill apparatus of Claim 19, wherein each said unit graindrill further comprises a transversely extended forward frame, the ground opener assembly being adjustably mounted on the transversely extending forward frame to permit variations of the spacing between the ground opener assemblies;

the spacing between said unit graindrills being; one, a single row of row-crop crop width; two, a Twin-row of row-crop row width;

further comprising a means for adjusting the rate at which the seed is metered at each individual said seed-delivery opening;

the width of a said unit graindrill being that of the crop' harvesting machine tire width;

further comprising, tilling means positioned ahead (forward) of each said unit graindrill for tilling the ground prior to the planting of the seed;

a transverse support toolbar further comprises a standard three point hitch for mounting said toolbar on a tractor or the like;

each ground opener assembly comprises, ground opening means for opening the ground to receive seed, seed-conveying means situated immediately above the ground opening means for conveying the seed from the seed-containing means to the ground, and wheel means situated under the said toolbar being operably connected to the means for metered feeding of the seeds, thereby causing the seed to be metered in direct relation to the longitudinal motion of the unit grain-drills with respect to the ground;

further comprising a lateral adjustment bracket for permitting the lateral adjustment of the ground opening means,

the ground opening means being further pivotally connected to said lateral adjustment bracket by means of a trailing arm of fixed length pivoted to the lateral adjustment bracket, and a press wheel located at the distal end of said trailing arm and biased into contact under predetermined pressure with the ground by a spring which is therefore supported by the fixed hopper frame.

21.    A no-till interplanter apparatus for planting row-crop rows between cluster-rows of grass-grain comprising,

an elevated transverse support toolbar,

a standard three point hitch for mounting said toolbar on a tractor or the like for conveying the same over a field to be interplanted,

a plurality of planter units and tilling means adjustably attached to said toolbar and adjustable along said tooblar to vary the spacing the units, each planter unit including means for containing seed, means for metered feeding of seeds therefrom, means for opening the ground, means for delivering the metered seed into the openings thus created and means for closing the ground over the seed thus deposited, for planting in the spaces between stand cluster-rows of grass-grain.

22. The interplanter apparatus of Claim 21 further comprising tilling means positioned forward of each planter unit in the direction of planting.

23. A Modular Single-Double intercropping apparatus comprising,

a tractor,

a toolbar,

a standard three point hitch for mounting said toolbar to said tractor for conveying the same over a field,

a modular graindrill,

a plurality of modular graindrills adjustably attached to said toolbar and adjustable along said toolbar to vary the spacing between the said modular unit graindrills, said modular unit graindrills arranged to plant a full stand of grass-grain within the modular planted rows only, each being; one, a tractor track-straddle width; two, a tractor track-within width, with modular width spaces there-between said modular rows of grass-grain, means to mark a central-to-the swath modular cluster-row,

a modular field cultivator,

a plurality of modular tillage tools adjustably attached to said toolbar adjustable along said toolbar to vary the spacing between the said modular tillage tools, said modular tillage tools tilling the soil in said modular spaces between said modular rows of standing grass-grain,

a modular interplanter,

a plurality of modular planter units adjustably attached to said toolbar and adjustable along said toolbar to vary the spacing between the said modular planter units,

a plurality of planter units adjustably attached to said modular planter units bar and adjustable along said modular planter units bar to vary the spacing between the said planter units, said modular planter units and planter units arranged to plant a full stand of row-crop crop within said modular spaces only, each being; one, a tractor-straddle width; two, a tractor track-within width,

a harvesting machine, to harvest said grass-grain crop tracking the said modular cluster-rows of grass-grain, to harvest said row-crop crop, the second planted crop.

24. A Modular Single-Double intercropping apparatus, comprising,

a tractor,

a toolbar,

a standard three point hitch for mounting said toolbar to said tractor for conveying the same over the field,

a modular graindrill,

a plurality of modular unit graindrills adjustably attached to said toolbar and adjustable along said toolbar to vary the spacing between the said modular unit graindrills, said modular unit graindrills arranged to plant a full stand of grass-grain within the said modular rows only, each being; one, a tractor track-straddle width; two, a tractor track-within width, with modular width spaces there-between said modular rows of grass-grain, means to mark a swath-central modular cluster-row,

a modular field cultivator,

a plurality of modular tillage tools adjustably attached to said toolbar and adjustable along said toolbar to vary the spacing between the said modular tillage tools, said modular tillage tools tilling the soil in said modular spaces between said modular rows of standing grass-grain,

means to interplant second crop at a later time,

a harvesting machine, to harvest said grass-grain crop tracking the said modular cluster-rows, to harvest second planted crop.

25. The Modular Single-Double intercropping apparatus of Claim 24 wherein the means to interplant second seasonal crop is a modular graindrill.

26. A Modular Fallow Farming intercropping apparatus comprising,

a tractor,

a toolbar,

a standard three point hitch for mounting said tractor to said tractor for conveying the same across the field,

a no-till modular graindrill,

a plurality of modular unit graindrills adjustably attached to said toolbar and adjustable along said toolbar to vary the spacing between the modular unit graindrills, said modular unit graindrill including means to plant modular rows of grass-grain with the same width modular spaces there-between, the said modular rows of grass-grain and said modular spaces
being; one, a track-straddle width; two, a track-within width
of said tractor;

a modular field cultivator,

a plurality of modular tillage tools adjustably attached
to said toolbar and adjustable along said toolbar to vary the
spacing between the said modular tillage tools, said modular
field cultivator tilling modular spaces between said modular
rows of grass-grain,

a harvesting machine to harvest said modular rows
of grass-grain.

27. Modular graindrill apparatus comprising,

a transverse support toolbar,

means for mounting said toolbar on a tractor or the
like for conveying the same over a field to be planted,

a plurality of modular unit graindrills adjustably
attached to said toolbar and adjustable along said toolbar to
vary the spacing between the units, each modular unit graindrill
including means for containing seed having a transversely spaced
series of seed-delivery openings, means for metered feeding
of seed therefrom, and,

a number of ground opener assemblies transversely
serially arranged, each ground opener assembly including means
for opening the ground, means for delivering the metered seed
into the openings thus created, and means for closing the ground
over the seeds thus deposited.

28. The modular graindrill apparatus of Claim 27, wherein
each said modular unit graindrill further comprises, a transversely
extended forward frame, the ground opening assemblies being
adjustably mounted on the transversely extended forward frame to
permit variation of the spacing between the ground opening assemblies.

the spacing between the said modular unit grain-drills being, one, a said tractor tracking-within width, two, a said tractor track-staddling width;

further comprising, a means for adjusting the rate at which the seed is metered at each individual said seed-delivery opening;

further comprising, tilling means positioned ahead of each said modular unit graindrill for tilling the ground prior to the planting of the seed;

a transverse support toolbar further comprises a standard three point hitch for mounting said toolbar on a tractor or the like;

each ground opener assembly comprising ground opener means for opening the ground to receive seed, seed-conveying means attached immediately above the ground opening means for conveying the seed from the seed-containing means to the ground, and wheel means situated under the said toolbar being operably connected to the means for metered feeding of the seeds, thereby causing the seed to be metered in direct relation to the longitudinal motion of the modular unit graindrills with respect to the ground;

further comprising a lateral adjustment bracket for permitting the lateral adjustment of the ground opening means, a ground opening means being further pivotally connected to said lateral adjustment bracket by means of a trailing arm of fixed length pivoted to the lateral adjustment bracket, a press wheel located at the distal end of said trailing arm, and biased into contact under predetermined pressure with the ground by a spring which is therefore supported by the fixed hopper frame.

29.    A modular interplanter apparatus for planting
modular rows of row-crop between modular cluster-rows
of grass-grain comprising,

a elevated transverse support toolbar,

a standard three point hitch for mounting said
toolbar on a tractor or the like for conveying the same
over the field to be interplanted,

a plurality of bars adjustably attached to said
toolbar and adjustable along said toolbar to vary the
spacing between the bars,

a plurality of planter units adjustably attached
to said bar and adjustable along said bar to vary the
spacing between the units, each planter unit including
means for containing seed, means for metered feeding of
seeds therefrom, means for opening the ground, means for
delivering the metered seed into the openings thus created
and means for closing the ground over the seed thus deposited for planting in the modular spaces between the standing modular cluster-rows of grass-grain.

30.    The modular interplanting apparatus of Claim 29
further comprising tilling means positioned ahead of each
planter unit for tilling the ground.

31.    A method of farming which increases crop yield and
which reduces soil erosion comprising the steps of:

planting a grass-grain in cluster-rows containing
at least three grass-grain rows and having dedicated spaces
located between the cluster-rows;

interplanting a second crop subsequently in the
dedicated spaces between the cluster-rows;

harvesting the grass-grain when the grass-grain
reaches maturity without damaging the second crop; and

harvesting the second crop when the second crop
reaches maturity.

FIG. 1

FIG. 2

0132521

36

33

26

61

39

38

43

34

46

**FIG. 5**

37

36

28

33

29

39

40

25

41

41

44

45

47

42

43

27

62

46

34

**FIG. 3**

36

33

29

39

44

42

46

**FIG. 4**

0132521

0132521

FIG.6

FIG. 7

FIG. 7A

0132521

FIG. 8

FIG.10

FIG. 9

FIG.11

FIG. 12

FIG. 13

FIG. 13A

0132521

FIG. 14

FIG. 15

0132521

FIG.16

FIG.17

FIG. 18

FIG. 19

FIG. 19A

FIG. 19B

0132521

56A

184

187

53

52

188

51

**FIG. 20**

185

188

52

187

51

**FIG. 20A**

46

0132521

FIG. 21

FIG. 21A

0132521

FIG. 22

FIG. 23

0132521

FIG. 24

FIG. 25

FIG. 26

FIG. 27

European Patent Office

# EUROPEAN SEARCH REPORT

**0132521**
Application number

EP 84 10 5129

## DOCUMENTS CONSIDERED TO BE RELEVANT

| Category | Citation of document with indication. where appropriate. of relevant passages | Relevant to claim | CLASSIFICATION OF THE APPLICATION (Int Cl ³) |
|---|---|---|---|
| Y | EP-A-0 040 385 (E.P. HILMER)<br><br>* Claims 1, 3, 5, 7, 10; page 4, line 11 - page 7, line 22; page 9, line 10 - page 11, line 8; figures 1, 6-8 * | 1,14, 31 | A 01 B 79/02<br>A 01 C 7/00<br>A 01 G 7/00 |
| A | | 3-6,10 ,11,15 -30 | |
| | --- | | |
| Y | Soviet Inventions Illustrated, week B20, 20 June 1979, section P11, & SU-A-614764 | 1,31 | |
| | --- | | |
| A | Soviet Inventions Illustrated | 2 | |
| | --- | | **TECHNICAL FIELDS SEARCHED (Int. Cl ³)** |
| A | FR-A-2 388 478 (E. WEICHEL)<br><br>* Claims 6, 14-17; page 12, line 21 - page 13, line 30; page 14, line 31 - page 15, line 13; figure 5 * | 14-17, 19-24, 26-30 | A 01 B 79/00<br>A 01 C 7/00<br>A 01 G 7/00 |
| | --- | | |
| P,A | Soviet Inventions Illustrated, week K42, 30 November 1983, section P11, & SU-A-980643 (Cat. A) | 1,5,31 | |
| | --- | | |
| A | US-A-4 084 522 (L. YOUNGER) | | |
| | ----- | | |

The present search report has been drawn up for all claims

| Place of search | Date of completion of the search | Examiner |
|---|---|---|
| BERLIN | 09-08-1984 | BERGZOLL M C |